# EUROPÄISCHE PATENTANMELDUNG

(11) **EP 0 876 895 A1**
(43) Veröffentlichungstag der Anmeldung: **11.11.1998**
(21) Anmeldenummer: 98250156.1
(22) Anmeldetag: 08.05.1998
(51) Int. Cl.: B29C 47/06, B29C 47/20, B29C 47/70

(54) **Extrusionswerkzeug und Verfahren zu seiner Herstellung**

(30) Priorität: 10.05.1997 DE 19720862
(71) Anmelder: B & W Kunststoffmaschinenbau & Handelsgesellschaft mbH, 12347 Berlin (DE)
(72) Erfinder: Krebs, Stefan, 12105 Berlin (DE)
(74) Vertreter: Pfenning, Meinig & Partner

(57) **Zusammenfassung**

Die vorliegende Erfindung bezieht sich auf ein Extrusionswerkzeug (1) mit einem Kreisringaustrittsspalt bzw. Ringschlitz, insbesondere Pinolenwerkzeuge und Dornhalterwerkzeuge, sowie auf ein Verfahren zur Herstellung eines derartigen Extrusionswerkzeuges.

Die vorliegende Erfindung zeichnet sich dadurch aus, daß der Mitteldorn (4) ringförmig von einem Strömungsteiler (3) umgeben ist, der den Schmelzestrom in zwei ringförmige Teilströme aufteilt. Der Mitteldorn (4) und/oder der Strömungsteiler (3) sind dabei in dem dem Kreisringaustrittsspalt (13) unmittelbar vorgelagerten Bereich exzentrisch zur Mittelachse des Kreisringaustrittsspaltes (13) angeordnet. Hierdurch ergeben sich zwei Schmelzeströme mit exzentrischer Wanddickenverteilung.

## Beschreibung

Die vorliegende Erfindung bezieht sich auf ein Extrusionswerkzeug zur Herstellung ring- oder schlauchförmiger Extrudate, insbesondere auf Extrusionswerkzeuge mit einem Kreisringaustrittsspalt bzw. Ringschlitz sowie auf ein Verfahren zur Herstellung eines derartigen Extrusionswerkzeuges. Extrusionswerkzeuge werden zur Herstellung von Rohren, Schläuchen, Kabelummantelungen sowie im Hohlkörperblasverfahren zur Herstellung von Flaschen, Tanks, Kanistern etc. verwendet.

Nach dem Stand der Technik werden Extrusionswerkzeuge beispielsweise als zentral von der auszuformenden Schmelze angeströmte Dornhalterwerkzeuge oder auch als seitlich angeströmte Pinolenwerkzeuge ausgebildet. Beide besitzen einen kreisringspaltförmigen Austrittquerschnitt, der durch das Werkzeuggehäuse und einen mittig in dem Gehäuse angeordneten Verdrängungskörper bzw. Mitteldorn gebildet wird, so daß kreisringförmige Querschnitte extrudiert werden. Beiden Werkzeugen ist gemeinsam, daß sich am Werkzeugaustritt, dem sogenannten Düsenmundstück, üblicherweise ein längerer konzentrischer Ringspalt, der beispielsweise als Staubalken ausgeführt sein kann, befindet, in welcher eingebrachte Deformationen der Schmelze relaxieren können. Weiterhin kann der äußere Mundstückring relativ zum inneren Verdrängerkörper zur Beeinflussung des Flusses auf den Austrittsumfang längs seiner Mittelachse verschoben werden. Die Pinole bzw. der Torpedo ist bei der Schlauchextrusion mittig in dem Werkzeug angeordnet.

Bei den Dornhalterwerkzeugen wird der in einem kreisförmigen Fließkanal vom Extruder angelieferte Schmelzestrom im Werkzeug von einem mittig in dem Schmelzestrom befindlichen Torpedo, auch Dornhalterspitze genannt, in eine Ringspaltströmung umgeformt und fließt zwischen dem Gehäuse und dem Dornhalter in Richtung des Mundstückbereiches. Zur Halterung des Torpedos befinden sich zwischen dem Torpedo und dem Gehäuse ein oder mehrere Dornhalterstege, die den Torpedo in der Mitte des Gehäuse fixieren. Nachteilig ist hieran, daß die den Dorn haltenden Stege in der Regel Fließmarkierungen bewirken. Diese können einerseits als lokale Dünnstellen und Streifen sichtbar sein oder auch aufgrund ihrer gegenüber der ungestört fließenden Schmelze veränderten Struktur zu mechanischen Schwachstellen führen. Ursache hierfür können die hohe Schmelzeorientierung in Stegnähe oder auch Dichteunterschiede aufgrund von Temperaturunterschieden zwischen Schmelze und Steg sein. Zur Verminderung dieser Fehlstellen werden Dornhalterwerkzeuge eingesetzt, bei denen sich zwischen dem Gehäuse und dem Torpedo ein Tragring (Dornhalterring) mit versetzt angeordneten Stegen befindet. Zwar erzeugen die versetzt angeordneten Stege ebenfalls Fließnähte. Diese gehen jedoch nicht mehr durch die ganze Wand des extrudierten Halbzeuges, so daß sich die Qualität des ausgeformten Gesamtschlauches verbessert. Anders gesagt, wird durch den Tragring der Schmelzestrom in zwei konzentrisch ineinanderliegende Schmelzeströme aufgeteilt, wobei die Fließmarkierungen in jedem der beiden konzentrischen Schmelzeströme versetzt gegeneinander angeordnet sind und so jeweils nur durch die Hälfte des Gesamtschmelzestroms gehen.

Bei Pinolenwerkzeugen ist der Verdrängungskörper (auch Pinole, Dorn genannt) in die dem Kreisringspalt entgegengesetzte Richtung fortgesetzt und zentral am Gehäuse befestigt. Daher wird die Schmelze immer unter einem Winkel, meistens jedoch 90°, vom Extruder dem Werkzeug zugeführt. Die eintretende Schmelze wird über einen Verteilerkanal, welcher auf der Pinole und/oder im äußeren Werkzeugkörper angebracht sein kann, um die Pinole herumgeführt, wobei sich auf der der Zufuhr gegenüberliegenden Seite charakteristische Bindenähte bilden, die dieselben Nachteile wie die Fließmarkierungen bei Dornhalterwerkzeugen aufweisen.

Generell ist also das Problem der Fließnähte darauf zurückzuführen, daß bei Extrusionswerkzeugen mit Kreisringspalt, wie zum Beispiel bei Pinolenwerkzeugen oder Dornhalterwerkzeugen, sich in der Mitte der kreisringartig ausgeformten Schmelze ein Mitteldorn oder Verdränger befindet, der über eine Halterung in seiner Position fixiert werden muß. Diese Halterung muß von der Schmelze umflossen werden und verursacht so die genannten Fließnähte.

Ein weiterer Nachteil bei den Pinolenwerkzeugen ist, daß durch die unterschiedlich langen Fließwege um die Halterungen bis zum Erreichen der Austrittsöffnung im Normalfall unterschiedliche Fließgeschwindigkeiten innerhalb des Werkzeuges auftreten. Denn einspeisungsseitig ist der Fließweg etwas kürzer, so daß dort nach dem Prinzip des geringsten Widerstandes mehr Material abfließt. Die Folge ist, daß das Extrudat ungleichmäßig rundum verteilt wird.

Eine Möglichkeit zur Vermeidung von durch das Extrudat gehenden Bindenähten besteht darin, wie bei den Dornhalterwerkzeugen den Schmelzestrom in zwei Schmelzeströme aufzuteilen und jeden der Schmelzeströme mittels zweier Verteilersysteme ringförmig auszubilden. Dabei werden die beiden ringförmigen Verteilersysteme koaxial derart ineinander angeordnet, daß die Einspeisungen um 180° zueinander verdreht sind. Dadurch werden zwei Schläuche ausgebildet, deren Bindenähte ebenfalls um 180° versetzt sind. Die Bindenähte gehen folglich nur noch durch die Hälfte des Gesamtschlauches. Dieses "Schlauchüber-Schlauch"-Prinzip wurde in der DE 21 00 192 offenbart.

Das Problem der ungleichmäßigen Rundumverteilung des Extrudates aufgrund unterschiedlicher Fließwege wurde durch die gezielte Gestaltung von Verteilerkanälen um die Halterung der Pinole bzw. die Pinole, die sogenannten Verteilersysteme, gelöst. Die konkreten geometrischen Maße solcher Verteiler wurden anfangs über Versuche ermittelt. Mittlerweile existieren jedoch rheologische Berechnungsmodelle, die die Geometrieauslegung unter bestimmten Annahmen unterstützen und optimieren. In der Folge wurde das grundsätzlich dreidimensionale Aussehen einer solche Verteilergeometrie von den Breitschlitzwerkzeugen übernommen, wobei die Querschnitte der dort üblichen Fischschwanzdüsen bzw. Kleiderbügeldüsen (auch Herzkurvenverteiler genannt) entlang des Kreisringschlitzes auf der Pinole bzw. auf dem Gehäuse abgewickelt wurden. Diese Verteiler bestehen folglich aus zwei um die Pinole laufenden Verteilerkanälen, die sich in Richtung des Werkzeugmundstücks zum sogenannten Drosselfeld, einem Ringkanal von konstanter geringerer Tiefe öffnen. Die Verteilerkanäle führen die Schmelze so um die Pinole, daß entlang ihres Weges mehr und mehr Material in das Drosselfeld abströmt. Zum Schluß treffen sich beide Verteilerkanäle und bilden eine Fließnaht aus. Das Drosselfeld wird auf der Seite des Werkzeugmundstücks gegebenenfalls über einen längeren konzentrischen Ringspalt zur Relaxation der Schmelze in einen konzentrischen Ringspalt ausgeformt.

Fertigungstechnisch stellt ein Pinolenwerkzeug nicht allzu hohe Anforderungen. Es weist nach dem Stand der Technik im Drosselfeldbereich eine konstante Spalttiefe auf, die auf einfache Art und Weise in zwei Achsen gefräst werden kann. Die zylindrischen bzw. konischen Segmente unterhalb jedem der beiden Verteilersysteme, das heißt im Bereich des verdrängenden und einen konzentrischen Schmelzestrom ausbildenden Mundstücks, d.h. im Bereich des längeren konzentrischen Ringspaltes, kann konventionell gedreht werden. Lediglich die Verteilerkanäle müssen empirisch bzw. über numerische Verfahren rheologisch optimiert und anschließend 3-Achsen-gefräst werden.

Auch bei Verwendung des Schlauch-über-Schlauch-Prinzipes bei Pinolenwerkzeugen bzw. bei funktionell entsprechenden Verwendung eines Tragringes bei Dornhalterwerkzeugen ergibt sich jedoch die Bildung von Nähten, die durch 50 % der Gesamtschlauchdicke gehen und die Ästhetik und die Stabilität des auszuformenden Gegenstandes bei dem Ausblasverfahren beeinträchtigen.

Da die hohen Anforderungen in bezug auf Optik und Rundumverteilung der Schmelze auch bei Verwendung dieser Prinzipien noch immer nicht befriedigt werden können, wurden Versuche gemacht, bei denen die Tiefenverteilung der Schmelze über den Umfang des Kreisringspaltes für jeden der Einzelschläuche als lineare Funktion angenommen wurde. Im Ergebnis ergibt sich so eine Schlauchdickenverteilung für den Außen- und den Innenschlauch, die jeweils linear ab- bzw. zunehmen und so gegeneinander versetzt sind, daß der aus Innen- und Außenschlauch zusammengesetzte Gesamtschlauch an jeder Stelle dieselbe Dicke aufweist. Für eine derartige Geometrie der Querschnitte der Einzelschläuche muß nun jedoch der Umfang der Pinole und der Verteilerhülse im Bereich des Mundstücks in 3-Achsen gefräst werden. In diesem Falle können die Bindenähte an die jeweils günstige Stelle des Einzelschlauches gesetzt werden, so daß die Bindenähte lediglich durch einen kleinen Teil des Gesamtschlauches gehen und daher dessen Eigenschaften nur geringfügig beeinflussen. Als nachteilig hat sich jedoch herausgestellt, daß das Fließverhalten der Schmelze in den Verteilersystemen für den Innen- und den Außenschlauch nur dann rheologisch einwandfrei gestaltet werden kann, wenn nunmehr auch die Drosselspalttiefe variiert wird. In der Summe bedeutet dies, daß nun auch das Drosselfeld und die vormals zylindrischen bzw. konischen Segmente im Bereich des Mundstücks durch 3-Achsen-CNC-Fräsen hergestellt werden müssen. Zusätzlich ergibt sich, daß im Bereich der Dünnstelle jedes Einzelschlauches Unstetigkeitsstellen in der Form der Verteilerkanäle auftreten, die sich fertigungstechnisch nur schwer realisieren lassen. Aufgrund dieser wesentlichen fertigungstechnischen Nachteile wurde das Schlauch-über-Schlauch-Prinzip mit linearisierter Schlauchwanddickenverteilung in der Praxis nicht eingesetzt.

Aus der DE 26 25 786 A1 ist bereits ein Strangpreßkopf zum Herstellen eines Hohlstranges aus thermoplastischem Werkstoff bekannt, der einen von einem Gehäuse und einem konzentrisch dazu angeordneten Dorn begrenzten Stauraum für den Werkstoff, einen im Stauraum axial verschiebbaren Ringkolben und zwei Kanäle zum Zuführen des Werkstoffs, die in Richtung des Stauraums je eine ringförmige Mündung besitzen, aufweist. Um zu erreichen, daß die aus den beiden Mündungen in den Stauraum austretenden Werkstoffströme bei möglichst großen Bereichen an nacheinander verarbeitbaren unterschiedlichen Werkstoffen und/oder von unterschiedlichen Durchsatzmengen in der Zeiteinheit eine möglichst kleine Relativgeschwindigkeit haben, hat die Mündung eines der Kanäle einen Mindestdurchmesser, der größer als der Innendurchmesser des Ringkolbens ist, und befindet sich zwischen beiden Mündungen mindestens ein Teil des Ringkolbens, der die beiden in den Stauraum fließenden Werkstoffströme voneinander trennt.

Aufgabe der vorliegenden Erfindung ist es, Extrusionswerkzeuge sowie ein Verfahren zu ihrer Herstellung vorzustellen, mit denen ring- oder schlauchförmige Extrudate erzeugt werden können, deren Eigenschaften nur unwesentlich durch Naht- und Schwachstellen beeinflußt werden und die eine reproduzierbare Qualität mit hoher Maßhaltigkeit aufweisen. Weiterhin ist es Aufgabe der vorliegenden Erfindung, Extrusionswerkzeuge vorzustellen, die einen einfachen Aufbau aufweisen und die auf einfache und kostengünstige Art und Weise gefertigt werden können.

Diese Aufgabe wird erfindungsgemäß durch die kennzeichnenden Merkmale des Hauptanspruchs und des nebengeordneten Anspruchs in Verbindung mit den jeweiligen Oberbegriffen gelöst.

Das erfindungsgemäße Extrusionswerkzeug erzeugt mindestens zwei Schläuche mit exzentrischer Wanddicke, die gemeinsam den gewünschten Gesamtschlauch, beispielsweise mit konstanter Wanddicke bilden. Das Gehäuse, der Mitteldorn sowie der Strömungsteiler, der zur Aufteilung der Schmelze in Einzelströmeverwendet wird, besitzen im Bereich des konzentrischen Ringspaltes und vor dem Mundstück Innen- und Außenoberflächen mit im wesentlichen kreisringförmigem Querschnitt und sind daher durch konventionelles Drehen bzw. 2-Achsen-CNC-Fräsen herstellbar. Dadurch ergeben sich fertigungstechnische Vorteile und eine kostengünstige Herstellung.

Das erfindungsgemäße Verfahren zur Herstellung eines Pinolenwerkzeuges zeichnet sich gegenüber dem Stand der Technik dadurch aus, daß die Innenpinole und die Verteilerhülsen in wesentlichen Bereichen spanend geformt werden können. Insbesondere kann der Bereich vor der Zusammenführung gedreht und das Drosselfeld 2-Achsen-gefräst werden. Lediglich der Verteilerkanal muß wie auch im herkömmlichen Stand der Technik durch 3-Achsen-CNC-Fräsen hergestellt werden.

Zum Drehen und Fräsen der unterschiedlich exzentrisch geformten Bereiche ist lediglich ein geeignetes Umspannen der Pinole bzw. der Verteilerhülse zwischen zwei exzentrisch zueinander gelagerten Positionen notwendig. Die Abfolge der Dreh- und Frässchritte kann dabei günstigerweise so gewählt werden, daß ein Minimum an Umspannvorgängen benötigt wird.

Vorteilhafte Weiterbildungen der erfindungsgemäßen Extrusionswerkzeuge und des erfindungsgemäßen Herstellungsverfahrens werden in den abhängigen Ansprüchen gegeben.

Es können auch mehrere Strömungsteiler vorgesehen werden, die exzentrisch und versetzt zueinander angeordnet sind, so daß der Gesamtschlauch aus mehreren ineinanderliegenden Einzelschläuchen besteht, wobei die Fließnähte versetzt angeordnet in den Teilschläuchen an der dünnsten Stelle und an einer jeweils anderen Stelle des Gesamtumfanges auftreten. Auch die Pinole kann versetzt zur Mitte des Werkzeuges bzw. des Kreisringspaltes versetzt angeordnet werden, beispielsweise um in einem waagerecht extrudierten Rohr mit großer Wandstärke das nach der Extrusion auftretgende Fließen der "heißen Seele" des Rohres aufgrund ihrer Schwere durch eine von vornherein größer dimensionierte Wandstärke im oberen Bereich des Rohres auszugleichen.

Weiterhin ist es vorteilhaft, daß die Wandstärke des Strömungsteilers zwischen den beiden Einzelströmen entlang seines Umfangs konstant ist. Folglich kann die Wandstärke des Strömungsteilers minimiert werden und das Werkzeug kann insgesamt kleiner gebaut werden. Alternativ kann bei gleicher minimaler Wandstärke des Strömungsteilers wie im Stand der Technik das Werkzeug für einen höheren Schmelzedruck oder auch Schmelzedurchsatz ausgelegt werden.

Bei Wahl einer Exzentrizität zwischen 0,2 und 0,45 der Breite des Kreisringaustrittsspaltes ändert sich die Wanddicke des Einzelschlauches über seinen Umfang zwischen dem 0,3 bis 0,7fachen bzw. 0,1 bis 0,9 fachen der Wandstärke des Gesamtschlauches.

Um eine auf seinem Umfang konstante Wandstärke des Gesamtschlauches bzw. Rohres zu erzielen, können die Exzentrizitäten vom Mitteldorn und Strömungsteiler sich gegenseitig aufhebend dimensioniert werden. Eine besonders einfache Ausführungsform ergibt sich, wenn der Strömungsteiler einen Querschnitt mit exzentrisch angeordneter kreisringförmiger Gestalt konstanter Wandstärke besitzt.

Bei Pinolenwerkzeugen kann die Pinole und jede der mindestens einen Verteilerhülsen einfach durch Einspannen in zwei gegeneinander versetzten Positionen exzentrisch gefertigt werden. In diesem Falle wird das Drosselfeld bei exzentrischer Lagerung der Pinole bzw. der Verteilerhülsen gefertigt, beispielsweise durch Drehen und anschließendes 2-Achsen-Fräsen und besitzt daher über den Umfang der Pinole bzw. der Verteilerhülse eine veränderliche Tiefe. Drosselfeldtiefe und Verteilerkanaltiefe, die aus rheologischen Gründen entlang des Verteilerkanals, d.h. zum Kreisringspalt hin, abnimmt, ändern sich also in entsprechender Weise, das heißt der Verteilerkanal und das Drosselfeld sind entlang der Flußrichtung der Schmelze in dem Verteilerkanal in ihrer Größe zueinander skaliert. Dies hat insbesondere bei der numerischen rheologischen Optimierung eine größere Berechnungssicherheit zur Folge.

Bei Dornhalterwerkzeugen können die Stege zwischen Dornhalterring und Gehäuse sowie Dornhalterring und Torpedo jeweils im Bereich der Engstelle zwischen dem Dornhalterring und dem Torpedo bzw. dem Dornhalterring und dem Gehäuse angeordnet werden, so daß die Fließnähte lediglich auf einem geringen Teil der Wandstärke des Gesamtschlauches auftreten. Zur Stabilisierung der Dornhalterung können die Dornhalterstege sich in Strömungsrichtung der Schmelze erstrecken und so eine größere Seitenstabilität aufweisen. Weiterhin treten an dem Torpedo aufgrund dieser verlängerten Stege und des erhöhten Flußwiderstandes der Schmelze in dem Teilschlauch mit dem kleineren Querschnitt Rückstellkräfte an dem Torpedo auf, die den Torpedo mittig zu halten versuchen.

Werden zur Herstellung der Außenoberfläche einer Verteilerhülse diese zuvor mit der nach innen anschließenden Verteilerhülse oder der Pinole verstiftet, so wird beim Drehen der Außenoberfläche der Verteilerhülse die Exzentrität der verbundenen Verteilerhülse bzw. der Pinole automatisch kompensiert.

Im folgenden werden einige Beispiele eines erfindungsgemäßen Extrusionswerkzeuges sowie eines erfindungsgemäßen Verfahrens zu seiner Herstellung gegeben.
- Fig. 1: zeigt ein Pinolenwerkzeug nach dem Stand der Technik,
- Fig. 2: zeigt die Wanddickenverteilung der Einzelschläuche des Pinolenwerkzeugs aus Fig. 1,
- Fig. 3: zeigt die Zusammensetzung des Schlauches bei einem linearisierten Wanddickenverlauf,
- Fig. 4: zeigt ein erfindungsgemäßes Pinolenwerkzeug,
- Fig. 5: zeigt den Wanddickenverlauf der Einzelschläuche des Werkzeugs aus Fig. 4,
- Fig. 6: zeigt den Aufbau der Pinole des Werkzeugs aus Fig. 4,
- Fig. 7: zeigt zwei Querschnitte durch erfindungsgemäße Pinolenwerkzeuge,
- Fig. 8: zeigt zwei weitere Querschnitte durch erfindungsgemäße Pinolenwerkzeuge,
- Fig. 9: zeigt ein erfindungsgemäßes Dornhalterwerkzeug,
- Fig. 10: zeigt die Schritte zur Herstellung eines erfindungsgemäßen Pinolenwerkzeuges,
- Fig. 11: zeigt die Schrittfolge zur Herstellung von Pinole und Verteilerhülse eines erfindungsgemäßen Pinolenwerkzeuges, und
- Fig. 12: zeigt drei Möglichkeiten für die Schrittabfolge bei der Herstellung einer Verteilerhülse.

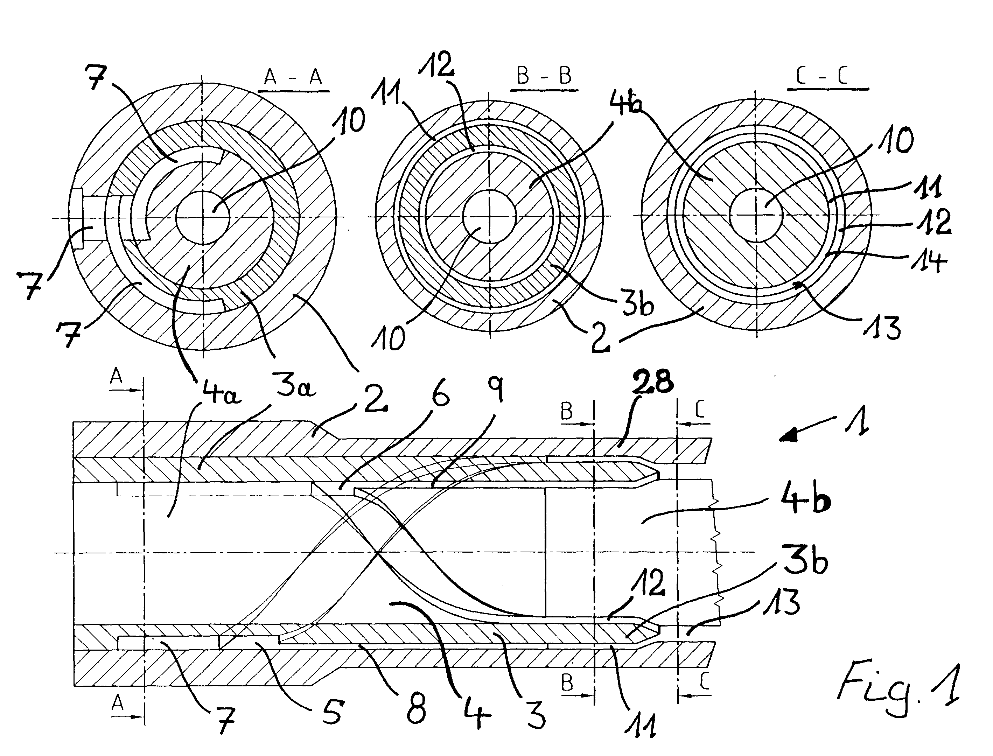

Fig. 1 zeigt ein Pinolenwerkzeug 1 im Längsschnitt sowie drei Querschnitte entlang der eingezeichneten Linien A-A, B-B und C-C. Das Pinolenwerkzeug besitzt eine zylinderförmige äußere Hülle 2, in die eine Verteilerhülse 3 (gleich äußere Pinole) und eine Pinole 4 (gleich innere Pinole) eingesetzt sind. Die Pinole 4 und die Verteilerhülse 3 weisen eine die Schmelze zu einem Kreisring ausformenden Verdränger (Mitteldorn) 4a bzw. 3a sowie Extensionen 4b und 3b auf, die sich in die dem Mundstück entgegengesetzten Richtungen erstrecken und die Verdränger 4a bzw. 3a an dem Gehäuse 2 befestigen. In das Endstück 3a der Verteilerhülse 3 ist ein äußerer Verteilerkanal 5 und in das Endstück 4a der Pinole 4 ein innerer Verteilerkanal 6 eingefräst. Diese Verteilerkanäle 5 und 6 stehen mit einer Schmelzezufuhr 7 in Verbindung und münden auf der Düsenseite in ein äußeres Drosselfeld 8 bzw. inneres Drosselfeld 9. Die Pinole 4 ist weiterhin mit einer Innenbohrung 10 versehen.

Wie in dem Schnitt A-A zu sehen ist, wird die Schmelzezufuhr 7 durch die Verteilerhülse 3 in zwei gegenläufige Schmelzeströme aufgeteilt, die einerseits zwischen der äußeren Hülle 2 und der Verteilerhülse 3 und andererseits zwischen der Verteilerhülse 3 und der Pinole 4 zur Seite abfließen. Aus der Zufuhr 7 fließt die Schmelze anschließend in den äußeren Verteilerkanal 5 bzw. inneren Verteilerkanal 6. Beide Verteilerkanäle besitzen Herzkurvenform und sind in ihrer Höhe sowie Tiefe rheologisch optimiert und anschließend durch 3-Achsen-CNC-Fräsen in die Verteilerhülse 1 bzw. die Pinole 4 eingefräst. Die Schmelze tritt dann entlang des Verteilerkanals in das Drosselfeld 8 bzw. 9 über und fließt anschließend durch einen in dem Verdränger 3b vorgesehenen längeren konzentrischen Ringspalt 28 in Richtung eines Kreisringaustrittsspaltes 13 des Pinolenwerkzeuges 1.

In dem Schnitt B-B durch den Endbereich des Extrusionswerkzeuges 1 ist zu erkennen, daß dort sämtliche Oberflächen der Pinole 4, der Verteilerhülse 3 sowie der äußeren Hülle 2 konzentrische Kreise bilden. Dabei sind gleiche Elemente in Fig. 1 wie auch in den folgenden Figuren mit denselben Bezugszeichen versehen. Zwischen der Pinole 4 und der Verteilerhülse 3 fließt die Schmelze für den inneren Schlauch 12 und zwischen der Verteilerhülse 3 und der äußeren Hülle 2 fließt die Schmelze für den äußeren Schlauch 11. Beide Schläuche sind entlang ihres Umfangs von gleicher Wandstärke. Wie in dem Längsschnitt zu erkennen ist, erstrecken sich die Verteilerkanäle in Form von Herzkurven ausgehend von der Schmelzezufuhr 7 in beide Richtungen entlang der jeweiligen Oberfläche der Pinole 4 bzw. der Verteilerhülse 3 und treffen sich auf der jeweils der Zufuhr 7 gegenüberliegenden Seite. An dieser Stelle bildet sich daher sowohl für den Innenschlauch 12 als auch für den äußeren Schlauch 11 eine Zusammenfließnaht. Da die Zufuhr 7, wie in dem Schnitt A-A zu sehen ist, für den äußeren Verteiler 5 und für den inneren Verteiler 6 sich gegenüberliegen, liegen auch die Zusammenfließnähte des äußeren Schlauches 11 und des inneren Schlauches 12 um 180° gegeneinander versetzt sich gegenüber.

Der Schnitt entlang der Linie C-C zeigt die Zusammensetzung des Gesamtschlauches 13 aus den beiden Einzelschläuchen 11 und 12.

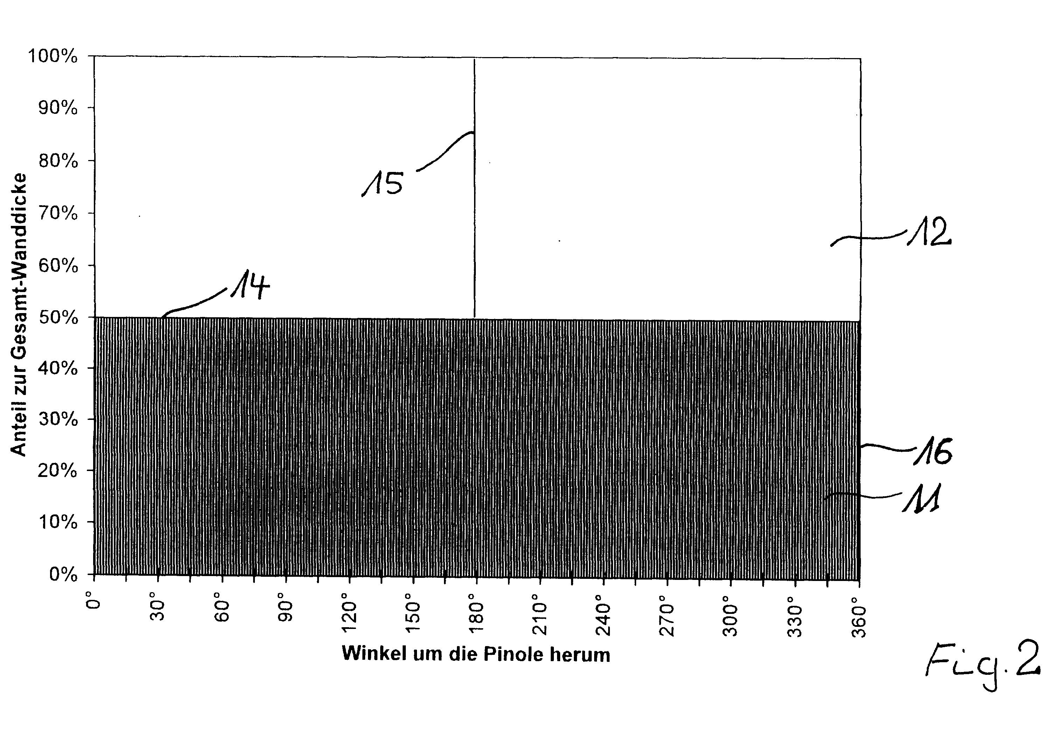

Fig. 2 zeigt die Verteilung der Wanddicke entlang des Umfangs des Gesamtschlauches auf die beiden Schläuche, den inneren Schlauch 12, der hier weiß dargestellt ist, und den äußeren Schlauch 11, der hier schraffiert dargestellt ist. Weiterhin ist die Zusammenfließnaht 15 für den inneren Schlauch sowie die Zusammenfließnaht 16 für den äußeren Schlauch 11 dargestellt. Es ist zu erkennen, daß die Zusammenfließnaht, die sowohl optisch als auch mechanisch eine Schwachstelle des Gesamtschlauches darstellt, jeweils nur durch die halbe Wanddicke des Gesamtschlauches geht, so daß sich auch schon nach diesem Stand der Technik eine erhebliche Verbesserung des Fließnahtproblemes ergibt.

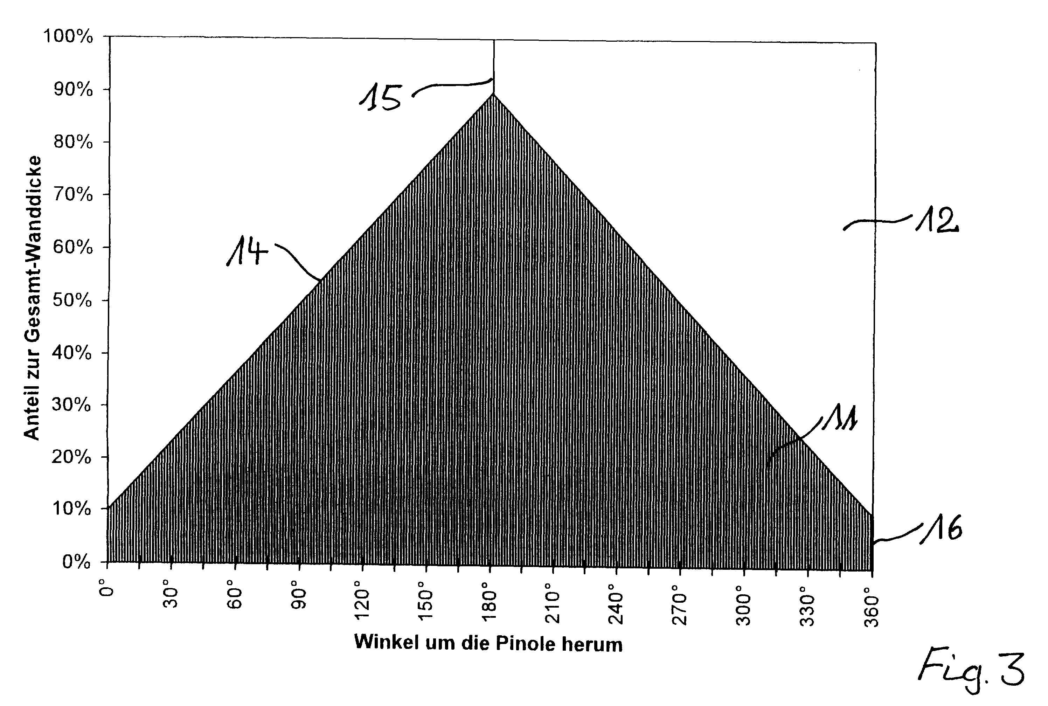

Zur weiteren Verringerung des Anteils der Fließnaht an der Gesamtwandstärke des Gesamtschlauches wurde dann ein linearisierter Wanddickenverlauf entwickelt, der in Fig. 3 dargestellt ist. Bei diesem Wanddickenverlauf nimmt zwar die Zusammenfließnaht 15 und die Zusammenfließnaht 16 jeweils nur 10 % der Gesamtwanddicke in Anspruch. Um eine solche Wanddickenverteilung zu erhalten, ist es jedoch nötig, sowohl die Drosselfelder der Pinole und der Metallhülse als auch die zugehörigen Verteilerkanäle in sämtlichen Raumrichtungen entlang ihres Verlaufs zu variieren. Derartige Pinolenwerkzeuge müssen daher größtenteils mit Hilfe von dreidimensionalen CNC-Fräsen hergestellt werden. Aufgrund des extremen Berechnungsaufwandes für die Geometrie der Verteilerkanäle und der Drosselfelder sowie aufgrund der extremen Schwierigkeit der Herstellung derartiger Pinolenwerkzeuge findet diese bekannte Technik bisher keinen Einsatz. Ein weiterer Nachteil für die Fertigung derartiger Pinolenwerkzeuge ist, daß an der Zusammenfließstelle 15 bzw. 16 in der Geometrie des jeweiligen Verteilerkanales eine Unstetigkeitsstelle auftritt, so daß diese nicht spanend geformt werden kann.

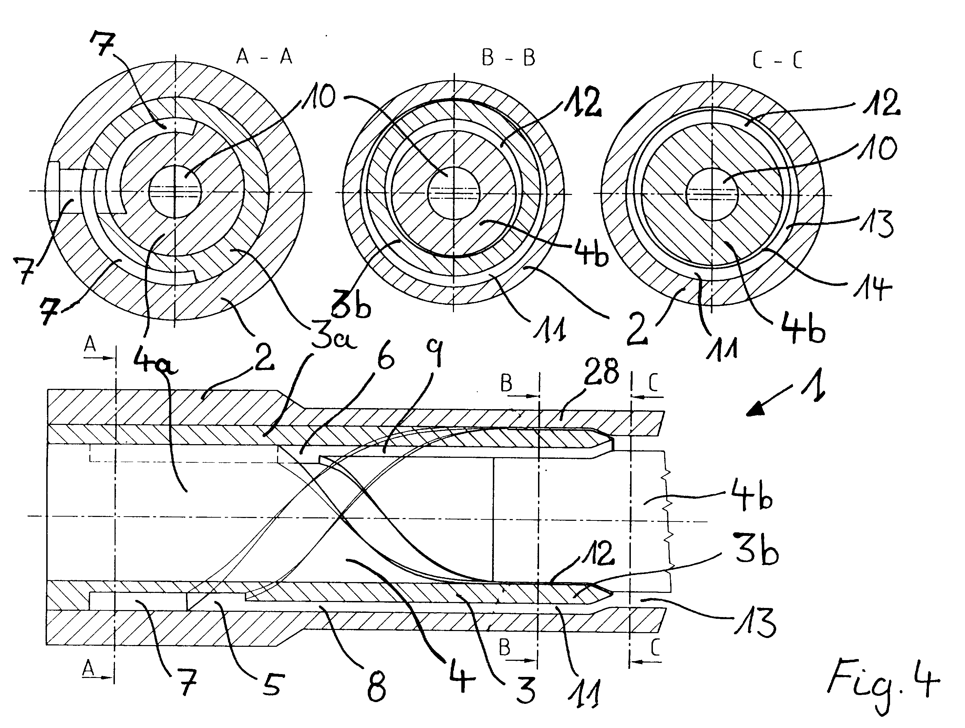

Fig. 4 zeigt ein erfindungsgemäßes Pinolenwerkzeug 1, das im wesentlichen dieselben Konstruktionselemente wie in Fig. 1 aufweist, die auch mit den gleichen Bezugszeichen versehen sind. Im Unterschied zum Stand der Technik ist in Fig. 4 unmittelbar vor dem Kreisringaustrittsspalt 13 im Bereich des längeren konzentrischen Ringspaltes 28 die Verteilerhülse exzentrisch angeordnet. Dies ist auch aus der Schnittzeichnung entlang der Linie B-B zu erkennen. Durch diese Geometrie des Ringspaltes ergibt sich die im Schnitt der Linie C-C gezeigte Wanddickenverteilung des äußeren Schlauches 11 und des inneren Schlauches 12. Auf diese Art und Weise läßt sich folglich an den Zusammenfließnähten eine ähnlich geringe Wandstärke erreichen wie nach dem Stand der Technik in Fig. 3. Vorteilhaft ist hier jedoch, daß die Verteilerhülse 3 und die Pinole 4 Oberflächen aufweisen, die die Form von Kreisen aufweisen und daher spanend formbar, insbesondere im Bereich des Ringspaltes 28 durch Drehen hergestellt werden können. Auch der Bereich des Drosselfeldes 8 kann durch exzentrisches Einspannen der Verteilerhülse bzw. der Pinole gedreht und die Vertiefungen des Drosselfeldes anschließend 2-Achsen-CNC-gefräst werden.

Da sich im Bereich des Drosselfeldes die Exzentrizitäten der Pinole 4 und der Verteilerhülse 3 gegeneinander aufheben, wird bei diesem erfindungsgemäßen Pinolenwerkzeug automatisch erreicht, daß die Summe der Wanddicken von Innenschlauch 12 und Außenschlauch 11 über den gesamten Umfang konstant ist.

Der innere Verteilerkanal 6 sowie der äußere Verteilerkanal 5 müssen wie im Stand der Technik numerisch oder experimentell rheologisch optimiert und anschließend 3-Achsen-gefräst werden. Bei dem in Fig. 4 dargestellten Pinolenwerkzeug 1 sind folglich die Herstellungsschritte nicht wesentlich aufwendiger als bei dem nach dem Stand der Technik in Fig. 1 dargestellten Werkzeug. Lediglich ein oder mehrere zusätzliche Umspannvorgänge sind erforderlich, während die Bearbeitung mit denselben Werkzeugen, nämlich durch Drehen und 2-Achsen-Fräsen bzw. für den Verteilerkanal 3-Achsen-Fräsen erfolgen kann.

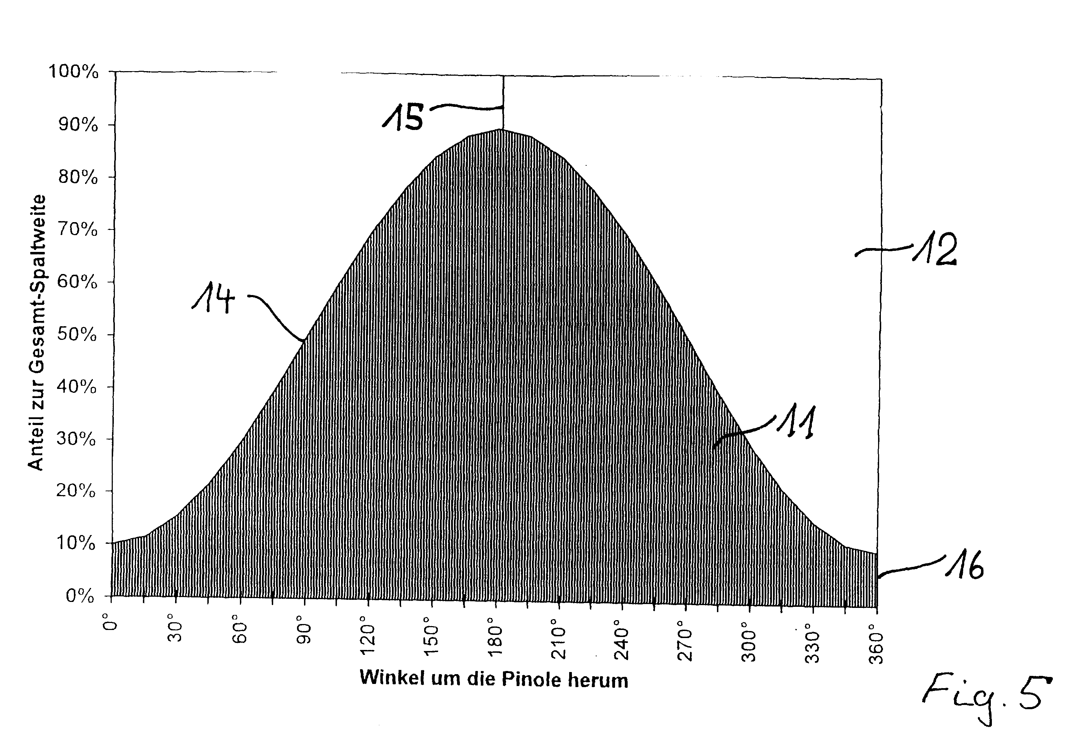

Bei dem in Fig. 4 dargestellten Pinolenwerkzeug ergibt sich die in Fig. 5 gezeigte exzentrische Wanddickenverteilung zwischen äußerem Schlauch 11 und innerem Schlauch 12. Wiederum sind an den Stellen der Fließnähte 15 bzw. 16 die Wandstärken der jeweiligen Schläuche 12 bzw. 11 sehr gering, im Bereich von 10 %, wobei die Gesamtwandstärke des aus beiden Einzelschläuchen 11 und 12 zusammengesetzten Gesamtschlauches über den gesamten Umfang der Pinole konstant ist.

Fig. 6A zeigt eine Innenpinole 4 mit einer Zufuhr 7, dem inneren Verteilerkanal 6 und einem Drosselfeld 9. Eingezeichnet ist wiederum der Verlauf einer Herzkurvenhälfte des Verteilerkanals 6.

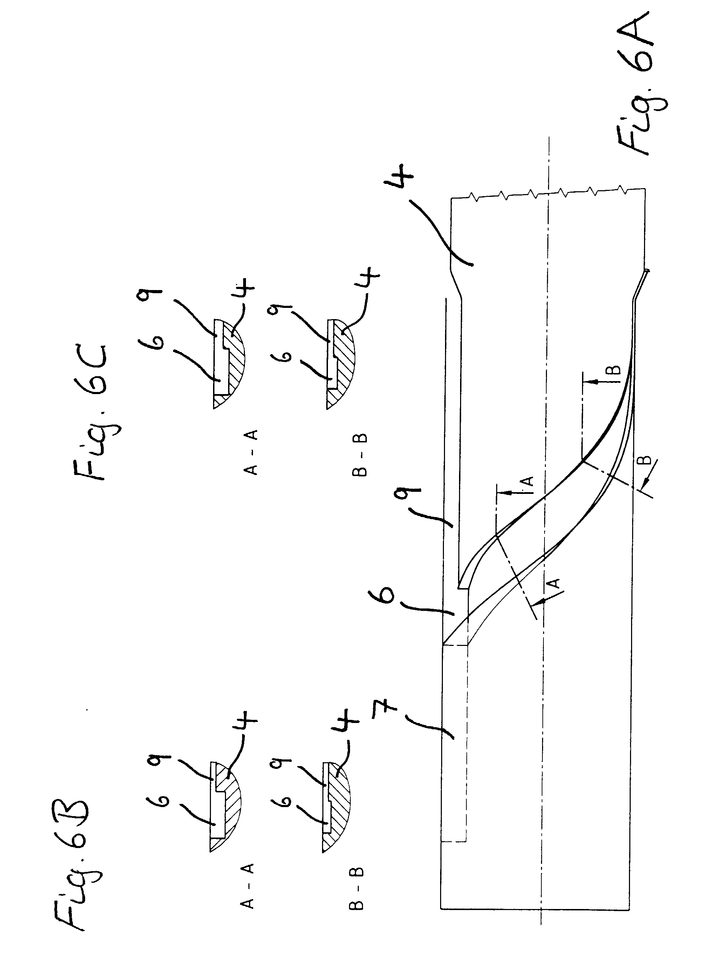

Fig. 6B zeigt den Querschnitt von Verteilerkanal 6 und Drosselfeld 9 entlang der Linien A-A bzw. B-B für eine Pinole entsprechend dem Stand der Technik nach Fig. 1. Bei dieser Pinole aus dem Stand der Technik ist die Tiefe des Drosselfeldes 9 entlang der Herzkurve immer konstant. Da die Tiefe des Verteilerkanales 6 aus rheologischen Gründen im Verlauf der Herzkurve abnimmt, ändert sich das Verhältnis zwischen den Tiefen des Verteilerkanals 6 und dem Drosselfeld 9 entlang der Herzkurve erheblich. Fig. 6C zeigt den Querschnitt vom Verteilerkanal 6 und Drosselfeld 9 entlang der in Fig. 6A eingezeichneten Linien A-A bzw. B-B für eine Pinole ensprechend dem in Fig. 4 dargestellten erfindungsgemäßen Werkzeug. Aufgrund der Exzentrizität der Außenoberfläche der Pinole 4 weisen die Schnitte senkrecht zum Verteilerkanal ähnliche Proportionen entlang der Herzkurve auf und das Verhältnis zwischen der Tiefe des Verteilerkanals 6 und der Tiefe des Drosselfeldes 9 ändert sich nicht in gleichem Ausmaße wie im Stand der Technik. Diese größere geometrische Ähnlichkeit der Schnitte bei der erfindungsgemäßen exzentrischen Anordnung garantiert mehr Berechnungssicherheit bei der gezielten Auslegung der Geometrie des Verteilerkanals als bei konventionellen Pinolenanordnungen.

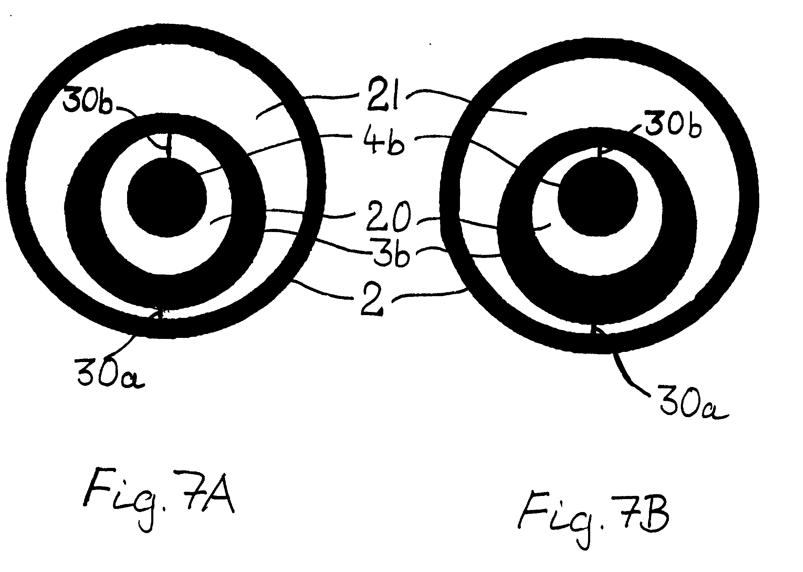

Fign. 7A und 7B zeigen zwei weitere Beispiele für die Geometrie erfindungsgemäßer Pinolenwerkzeuge zur waagerechten Extrusion dickwandiger Rohre im Bereich der in Fig. 4 eingezeichneten Linie B-B. Dabei sind die Querschnitte des Gehäuses 2 sowie der Endstücke 3b und 4b der Verteilerhülse bzw. der Pinole geschwärzt dargestellt. Weiterhin sind die Stellen der Fließnähte 30a und 30b im Außenschlauch bzw. im Innenschlauch dargestellt. In beiden Extrusionswerkzeugen ist die Schmelzezufuhr zu jedem der einzelnen Fließkanälen 20 und 21 zwischen Gehäuse 2 und Verteilerhülse (Außenschlauch) sowie Verteilerhülse und Pinole (Innenschlauch) um jeweils 180° versetzt gegen die Stelle der Fließnaht angeordnet, so daß sich die beidseitig um die Verteilerhülse bzw. die Pinole fließende Schmelze an der Stelle der Fließnähte 30a bzw. 30b wieder vereint.

In dem Pinolenwerkzeug gemäß Fig. 7A ist die Pinole in ihrem Endstück 4b außermittig angeordnet. Auch das Endstück 3b der Verteilerhülse ist außermittig angeordnet und besitzt eine sich entlang ihres Umfangs veränderliche Wandstärke. Dadurch ergibt sich eine größere Wandstärke des extrudierten Gesamtrohres im oberen Bereich des Rohres. Insbesondere bei der waagerechten Extrusion dickwandiger Rohre wird hierdurch das nach der Extrusion aufgrund der Schwerkraft zu erwartende Fließen der "heißen Seele" des Rohres nach unten vorab kompensiert, so daß sich im erkalteten Zustand ein Rohr mit konstanter Wandstärke ergibt.

Bei dem in Fig. 7B dargestellten Werkzeug ist der Endbereich 4b der Pinole mittig angeordnet, während der Endbereich 3b der Verteilerhülse exzentrisch angeordnet ist und eine in unterem Bereich erhöhte Wandstärke aufweist. Auch hierdurch wird erreicht, daß waagerecht extrudierte Rohre in ihrem oberen Bereich anfänglich eine größere Wandstärke als im unteren Bereich aufweisen.

Wesentlich bei allen hier vorgestellten Extrusionswerkzeugen ist, daß die Schmelzezufuhr so erfolgt, daß die Fließnähte sich jeweils im Bereich der geringsten Wandstärke der Einzelschläuche, d.h. im Bereich der engsten Stellen bzw. unmittelbar an der engsten Stelle der Fließkanäle 20, 21 bilden.

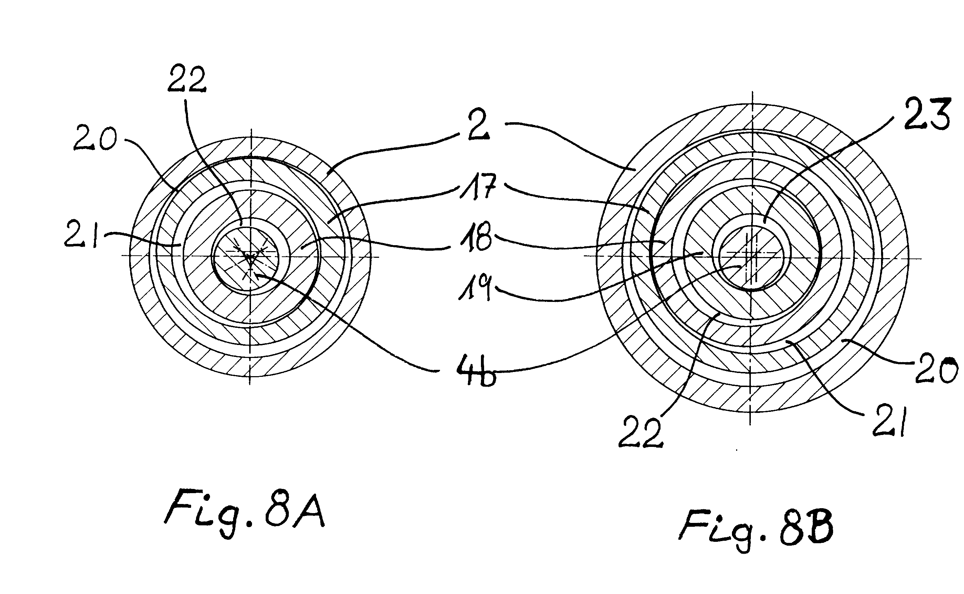

Fig. 8A und Fig. 8B zeigen Schnitte durch erfindungsgemäße Pinolenwerkzeuge entlang einer Linie, die der Linie B-B in Fig. 4 entspricht. In Fig. 8A ist ein Pinolenwerkzeug dargestellt mit einer Pinole mit einem dem Kreisringspalt zugewandten Endstück 4b und zwei Verteilerhülsen 17 und 18 sowie einer äußeren Hülle 2. Zwischen der Pinole 4 und den Verteilerhülsen 17 und 18 bilden sich nun drei Einzelschläuche aus, die anschließend zu einem Gesamtschlauch zusammengeführt werden. Das Pinolenendstück 4b und die Verteilerhülsen 17 und 18 sind um jeweils 120° gegeneinander versetzt um den Mittelpunkt der äußeren Hülle 2 exzentrisch angeordnet. Zum Ausgleich der exzentrischen Anordnung des Pinolenendstückes 4b weist die Verteilerhülse 17 entlang ihres Umfangs eine veränderliche Breite auf. Die auf einem Dreieck um den Mittelpunkt des Pinolenwerkzeugs angeordneten Mittelpunkte des Pinolenendstückes 4b und der Verteilerhülse 17 und 18 sind in Fig. 8A eingezeichnet. In Fig. 8B ist eine weitere erfindungsgemäße Pinolenanordnung gezeigt, bei der neben einer Pinole 4 mit einem Pinolenendstück 4b insgesamt drei Verteilerhülsenenden 17, 18 und 19 mit auf ihrem Umfang jeweils konstanter Breite angeordnet sind. Es bilden sich folglich vier Einzelschläuche 20, 21, 22 und 23, die zu einem Gesamtschlauch zusammengefügt werden. In diesem Falle sind die Mittelpunkte der drei Verteilerhülsenenden 17, 18 und 19 gegeneinander versetzt exzentrisch zum Mittelpunkt des Pinolenwerkzeugs angeordnet.

Sowohl in Fig. 4 als auch in Fig. 8 sind Werkzeuge gezeigt, bei denen die Wandstärken der Verteilerhülsenenden über den gesamten Verteilerhülsenumfang konstant gehalten (Fig. 4 und Fig. 8B) oder auch wie in Fig. 8A oder Fig. 8B geringfügig variiert werden können. Besonders vorteilhaft ist jedoch eine auf dem gesamten Umfang konstante Wandstärke bei mittiger Anordnung des Pinolenendstückes, da sich so die Exzentrizitäten von selbst ausgleichen und daher die Dicke des Gesamtschlauches entlang seines gesamten Umfanges weitestgehend konstant ist. Bei variierenden Wandstärken der Verteilerhülsenenden müssen diese so aufeinander abgestimmt werden, daß die Gesamtdicke des Schlauches entlang seines Umfanges konstant bleibt. Dies ist in Fig. 8A dargestellt.

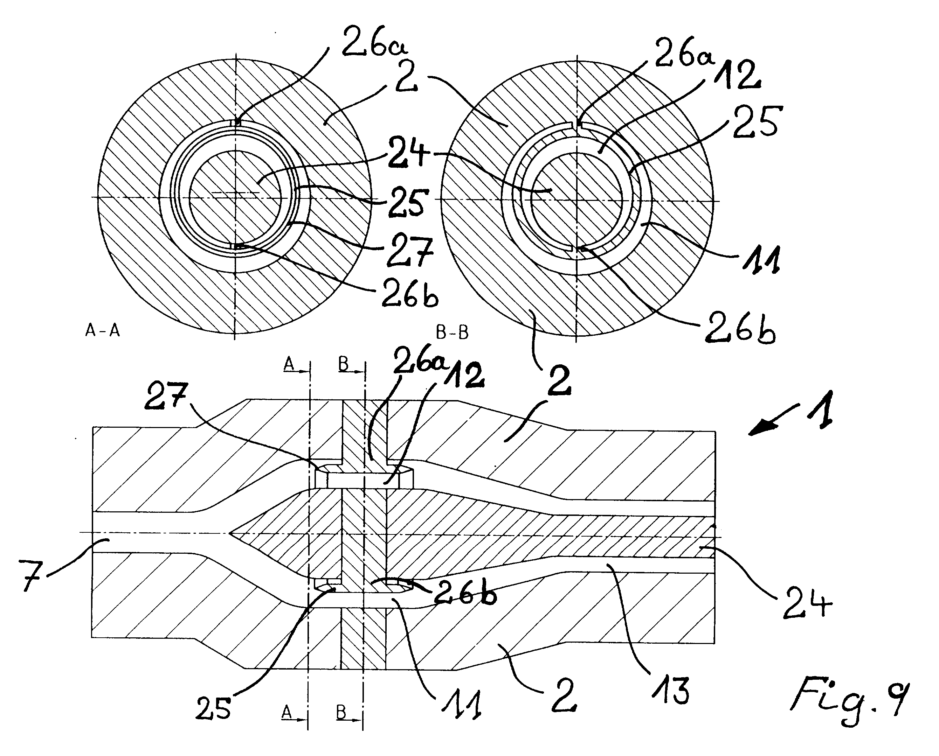

Fig. 9 zeigt ein erfindungsgemäßes Dornhalterwerkzeug 1, das ebenfalls eine äußere Hülle 2 und einen torpedoförmigen Mitteldorn 24 aufweist. Der torpedoförmige Mitteldorn 24 formt die über eine Zufuhr 7 in das Extrusionswerkzeug 1 einströmende Schmelze zu einem ringförmigen Schmelzestrom aus, der aus einem Kreisringaustrittsspalt 13 extrudiert wird. Der Mitteldorn wird mit Hilfe eines Dornhalterringes 27 sowie Dornhalterstegen 26a und 26b in der Mitte des Dornhalterwerkzeuges 1 gehalten. Der Dornhalterring 27 teilt den Schmelzestrom in zwei ringförmige Schmelzeströme 11 und 12, wobei der Steg 26a zwischen der äußeren Hülle 2 und dem Dornhalterring 25 sowie der Steg 26b zwischen dem Dornhalterring 25 und dem Torpedo 24 auf sich gegenüberliegenden Seiten angeordnet sind.

Die beiden Schmelzeströme für den inneren Schlauch 12 und den äußeren Schlauch 11 werden nach dem Dornhalterring 25 wieder zusammengeführt, wobei sich ein Gesamtschlauch in dem Kreisringaustrittsspalt 13 ausbildet. Dort wo die Schmelze durch die Stege 26a und 26b getrennt wurde, bilden sich wiederum Zusammenfließnähte in der Schmelze, die optisch und mechanisch unerwünschte Eigenschaften haben. Bei traditionellen Dornhalterwerkzeugen befindet sich der Dornhalterring konzentrisch um die Mitte des Dornhalterwerkzeuges. Bei dem erfindungsgemäßen Dornhalterwerkzeug 1 ist der Dornhalterring exzentrisch gelagert und die Stege 26a und 26b sind an den jeweiligen Engstellen der Schmelzeströme 11 und 12 angeordnet. Dadurch ergibt sich wiederum die in Fig. 5 für ein Pinolenwerkzeug gezeigte exzentrische Wanddickenverteilung für den äußeren Schlauch 11 und den inneren Schlauch 12. Dabei nehmen die Zusammenfließnähte, die sich durch die Stege 26a und 26b ausbilden, nur einen kleinen Teil der Wanddicke des Gesamtschlauches ein, so daß sie dessen Eigenschaften nur geringfügig beeinflussen.

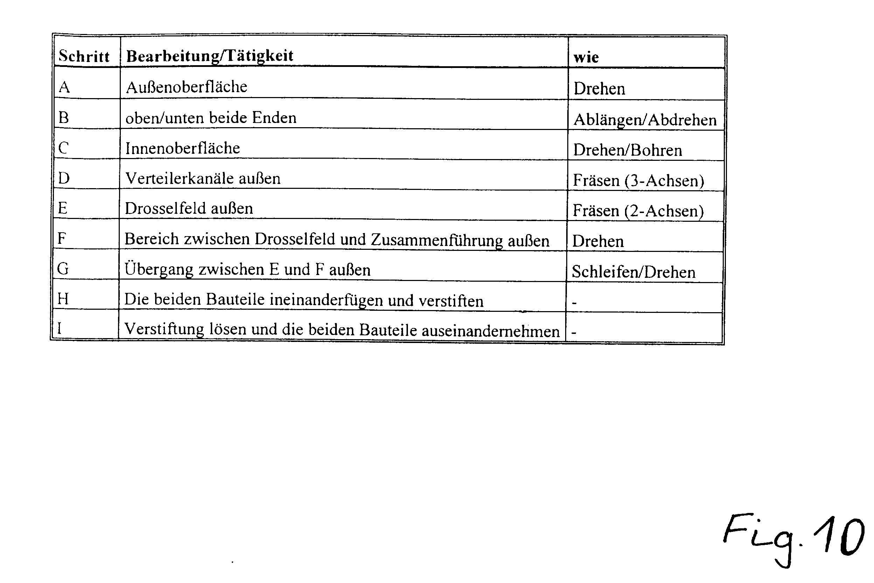

Fig. 10 beschreibt die Schritte, die zur Herstellung einer Pinole oder Verteilerhülse, wie in Fig. 4 gezeigt, durchgeführt werden müssen. Zur Herstellung einer Pinole oder einer Verteilerhülse muß die Außenoberfläche sowie die Innenoberfläche gedreht bzw. gebohrt werden. Weiterhin müssen die Enden abgelängt werden und das Drosselfeld sowie die Verteilerkanäle in die jeweiligen Außenoberflächen der Pinole oder Verteilerhülse eingefräst werden. An dieser Stelle soll auch erwähnt werden, daß selbstverständlich ein erfindungsgemäßes Extrusionswerkzeug hergestellt werden kann, indem die Verteilerkanäle und/oder das Drosselfeld in die Innenoberfläche der Verteilerhülse oder der äußeren Hülle gefräst werden. Dieser Fall läuft jedoch analog zu den bisher beschriebenen und im folgenden beschriebenen Beispielen und wird daher nicht besonders ausgeführt.

Weiterhin muß der Bereich zwischen Drosselfeld und Zusammenführung auf der Außenseite der Pinole bzw. der Verteilerhülse gedreht werden sowie der Übergang vom Drosselfeld zu diesem Bereich. Besonders einfach wird die Erzeugung der nötigen Exzentrizitäten auf der Verteilerhülse, wenn sie mit der Pinole ineinandergefügt wird und entsprechend der exzentrischen Einspannung der Pinole die Außenseite der Verteilerhülse gedreht wird.

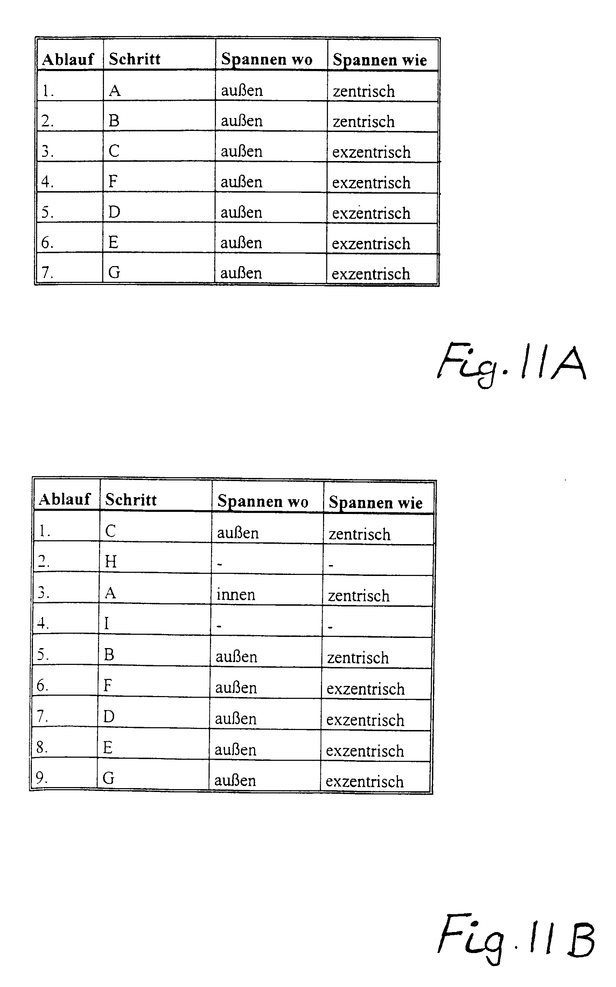

Entsprechend Fig. 11A wird die Pinole in einer ersten Position, im folgenden zentrisch genannt, außen eingespannt und die Außenoberfläche der Pinole im Bereich der Zufuhr und gegebenenfalls zusätzlich des Verteilerkanals und/oder des Drosselfeldes gedreht. In derselben Einspannung kann dann die Pinole an ihren beiden Enden abgelängt werden. Für die folgenden Schritte wird die Pinole in eine exzentrische Position, das heißt außermittig zu ihrer Mittelachse eingespannt. Diese exzentrische Position entspricht später nach erfolgter Montage der Pinole in dem Pinolenwerkzeug der Mitte des Werkzeuges. In dieser Position wird die Innenoberfläche der Pinole gebohrt, der Bereich zwischen Drosselfeld und Zusammenführung gedreht und anschließend die Verteilerkanalherzkurve sowie das Drosselfeld durch 3-Achsen-CNC-Fräsen bzw. 2-Achsen-CNC-Fräsen in die Pinole eingebracht. Abschließend wird der Übergang von dem Drosselfeld zum Bereich zwischen Drosselfeld und Zusammenführung durch Drehen oder Schleifen geglättet.

Fig. 11B zeigt ein Herstellungsverfahren für eine äußere Verteilerhülse. Die Verteilerhülse wird zuerst in der zentrischen Pinolenposition außen eingespannt und die Innenoberfläche der Verteilerhülse wird gebohrt und gedreht. Anschließend werden die zuvor hergestellte Pinole und die Verteilerhülse ineinandergefügt und verstiftet. In derselben Position wird nun die Außenoberfläche der Verteilerhülse im Bereich der Zufuhr gedreht. Dadurch, daß die Verteilerhülse über die Pinole in der zentrischen Pinolenposition gehalten wird, wird automatisch eine Außenoberfläche der Verteilerhülse erzeugt, bei der sich nach späterer Montage im Pinolenwerkzeug die Exzentrizitäten der Pinole und der Verteilerhülse so ausgleichen, daß die Summe der Wandstärken der extrudierten Einzelschläuche auf dem gesamten Umfang konstant ist.

Anschließend wird die Verstiftung gelöst und die Verteilerhülse noch einmal zentrisch außen eingespannt und anschließend die beiden oberen und unteren Enden abgelängt.

Nun wird die Verteilerhülse auf eine außermittige, exzentrische Position umgespannt und der Bereich zwischen Drosselfeld und Zusammenführung auf dem Außenumfang gedreht. Anschließend werden in derselben Spannposition der Verteilerkanäle 3-Achsen-CNC-gefräst und das Drosselfeld mit 2-Achsen-Fräsen in die Verteilerhülse eingebracht. Abschließend muß lediglich noch der Übergang zwischen dem Drosselfeld und dem Bereich zwischen Drosselfeld und Zusammenführung durch Drehen oder Schleifen abgeschrägt und geglättet werden.

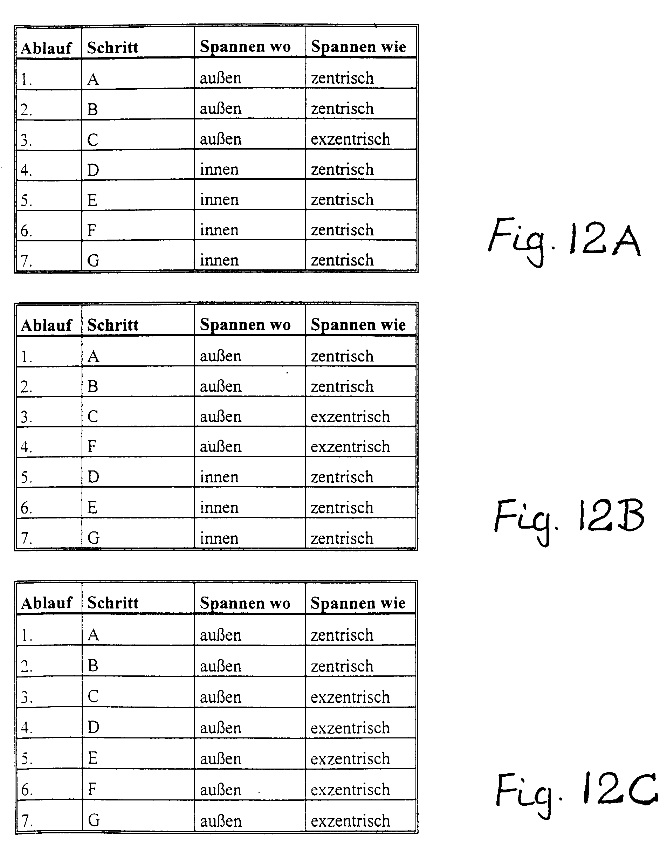

Die Fign. 12A bis 12C zeigen drei verschiedene Möglichkeiten, eine Verteilerhülse zu fertigen. Dabei besitzen die Symbole die in Fig. 10 gezeigte Bedeutung. Es ist leicht zu erkennen, daß sich durch eine Umordnung der einzelnen Bearbeitungsschritte lediglich die Zahl der Umspannvorgänge zwischen der zentrischen und der exzentrischen Position verändert. Es sind daher auch beliebige weitere Abfolgen der beschriebenen Bearbeitungsschritte a bis g geeignet, um eine erfindungsgemäße Verteilerhülse bzw. in Analogie eine erfindungsgemäße Pinole herzustellen.

Im Ergebnis zeigt sich, daß durch geeignete Umspannvorgänge dieselben Bearbeitungsmethoden wie im Stand der Technik nach Fig. 1 zur Herstellung von Pinolen und Verteilerhülsen verwendet werden können, wobei jedoch durch die exzentrische Wanddickenverteilung der beiden Einzelschläuche sich an den Nahtstellen der Einzelschläuche erheblich bessere Eingenschaften des Gesamtschlauches ergeben.

## Patentansprüche

1. Extrusionswerkzeug (1) zur Herstellung ring- oder schlauchförmiger Extrudate aus einem Schmelzestrom mit einem von einem Gehäuse (2) und einem Mitteldorn (4b) gebildeten Kreisringaustrittsspalt (13), einer Schmelzezufuhr (7) zu dem Kreisringaustrittsspalt (13) und mindestens einem ringförmigen Strömungsteiler (3b), wodurch zwischen dem Mitteldorn (4b) und dem Strömungsteiler (3b) zwischen dem Strömungsteiler (3b) und dem Gehäuse (2) sowie gegebenenfalls zwischen zwei Strömungsteilern mindestens zwei den Schmelzestrom in dem Werkzeug (1) in Einzelströme teilende, ringförmige Fließkanäle (11,12) gebildet werden, wobei die die Fließkanäle (11,12) begrenzenden Wände des Mitteldorns (4b), des Strömungsteilers (3b) und des Gehäuses (2) auf ihrem Umfang quer zur Flußrichtung der Schmelze im wesentlichen kreisförmig sind, sowie mit jeweils mindestens einem von der Schmelze beidseitig umflossenen Halteelement (4a,3a) für den Mitteldorn (4b) und den Strömungsteiler (3b), die sich zwischen dem Mitteldorn (4b) und dem Strömungsteiler (3b) oder dem Gehäuse (2) sowie zwischen dem Strömungsteiler (3b) und dem Gehäuse (2) beziehungsweise dem Mitteldorn (4) oder dem Gehäuse (2) erstrecken, **dadurch gekennzeichnet,** daß der Mitteldorn (4b) und/oder der Strömungsteiler (3b) so angeordnet und/oder ausgebildet sind, daß mindestens ein Fließkanal (11,12) einen exzentrischen Querschnitt mit einer Stelle geringster Breite aufweist und daß die Schmelzezufuhr (7) zu den Halteelementen (3a, 4a) und/oder die Halteelemente (3a,4a) in dem Fließkanal (11,12) mit exzentrischem Querschnitt so angeordnet sind, daß die die Halteelemente (3a,4a) beidseitig umfließende Schmelze im wesentlichen auf Höhe der Stelle geringster Breite zusammenfließt.

2. Extrusionswerkzeug nach Anspruch 1, dadurch gekennzeichnet, daß um den Mitteldorn (4) mindestens ein weiterer ringförmiger Strömungsteiler (18) angeordnet ist, wodurch aus einem der Fließkanäle zwei weitere Fließkanäle (21,22) gebildet werden, wobei die die weiteren Fließkanäle (21,22) begrenzenden Wände des weiteren Strömungsteilers (18) auf ihrem Umfang quer zur Flußrichtung der Schmelze im wesentlichen kreisförmig sind, daß ein weiteres von der Schmelze beidseitig umflossenes Halteelement für den weiteren Strömungsteiler sich zwischen dem weiteren Strömungsteiler und dem Gehäuse (2), dem Mitteldorn (4b) oder dem nebenliegenden Strömungsteiler (17,19) erstreckt,
daß der weitere Strömungsteiler (18) so angeordnet und/oder ausgebildet ist, daß mindestens einer der weiteren Fließkanäle (21,22) einen exzentrischen Querschnitt mit einer Stelle geringster Breite aufweist und
daß die Schmelzezufuhr zu dem weiteren Halteelement und/oder das weitere Halteelement so angeordnet ist, daß die das weitere Halteelement umfließende Schmelze im wesentlichen auf Höhe der Stelle geringster Breite zusammenfließt.

3. Extrusionswerkzeug nach mindestens einem der vorhergehenden Ansprüche, dadurch gekennzeichnet, daß der Fließkanal (11,12) mit exzentrischem Querschnitt durch mindestens eine bezüglich des Mittelpunktes ihrer Umfangslinie außermittig zum Kreisringaustrittsspalt (13) angeordnete Wand begrenzt ist.

4. Extrusionswerkzeug nach mindestens einem der vorhergehenden Ansprüche, dadurch gekennzeichnet, daß die Mitte des Außenumfangs des Mitteldorns (4b), die Mitten des Innen- und Außenumfangs des mindestens einen Strömungsteilers (3b) und/oder die Mitte des Innenumfangs des Gehäuses (2) exzentrisch zur Mitte des Kreisringaustrittsspaltes (13) angeordnet sind, wobei sich die Exzentrizitäten von Mitteldorn (4b), Strömungsteiler (3b) und Gehäuse (2) gegenseitig aufheben.

5. Extrusionswerkzeug (1) nach mindestens einem der vorhergehenden Ansprüche, dadurch gekennzeichnet, daß der mindestens eine Strömungsteiler (3b) in seinem unmittelbar vor dem Kreisringaustrittsspalt (13) liegenden Bereich entlang seines Umfangs eine im wesentlichen konstante Dicke aufweist.

6. Extrusionswerkzeug nach Anspruch 5, dadurch gekennzeichnet, daß der Strömungsteiler (3b) in seinem unmittelbar vor dem Kreisringspalt (13) liegenden Bereich außermittig zum Kreisringaustrittsspalt angeordnet ist.

7. Extrusionswerkzeug nach mindestens einem der vorhergehenden Ansprüche, dadurch gekennzeichnet, daß im Bereich unmittelbar vor dem Kreisringaustrittsspalt der Außenumfang des Mitteldorns (4b) mittig zum Kreisringaustrittsspalt angeordnet ist.

8. Extrusionswerkzeug (1) nach mindestens einem der Ansprüche 3 bis 7, dadurch gekennzeichnet, daß die Exzentrizität das 0,2 bis 0,45fache der Breite des Kreisringaustrittsspaltes (13) beträgt.

9. Extrustionswerkzeug nach einem der Ansprüche 1 bis 8, dadurch gekennzeichnet, daß eine Pinole (4) aus dem Mitteldorn (4b) und dessen Halteelement (4a) und/oder eine Verteilerhülse (3) aus dem Strömungsteiler (3b) und dessen Halteelement (3a) einen Verteilerkanal und ein an diesen anschließendes Drosselfeld aufweist, wobei im Bereich des Drosselfeldes die Pinole (4) einen Außenumfang im wesentlichen in Form eines zur Mitte des Kreisringaustrittsspaltes (13) zentrisch angeordneten Kreises und die mindestens eine Verteilerhülse (3) einen Außen- und Innenumfang im wesentlichen in Form zweier konzentrischer, in gleicher Weise zur Mitte des Kreisringaustrittsspaltes exzentrisch gelagerter Kreise aufweist.

10. Verfahren zur Herstellung eines Pinolenwerkzeuges nach Anspruch 9 mit einem Gehäuse (2), einer Pinole (4, Innenpinole) und mindestens einer Verteilerhülse (3, Außenpinole), wobei die Pinole (4) eine Schmelzezufuhr (7), einen Verteilerkanal (6) und ein Drosselfeld (9) aufweist,
**dadurch gekennzeichnet,**
daß die Herstellung der Pinole (4) folgende Schritte in beliebiger Reihenfolge umfaßt:
a) Einspannen der Pinole (4) in einer ersten Position und Drehen des Außenumfangs im Bereich der Schmelzezufuhr (7) und gegebenenfalls zusätzlich im Bereich des Verteilerkanals (6) und/oder des Drosselfeldes (9),
b) Einspannen der Pinole (4) in einer zweiten Position und Drehen einer Innenbohrung (10),
c) Einspannen der Pinole (4) in einer zweiten Position und Drehen des Außenumfangs des dem Kreisringaustrittsspalt (13) zugewandten Endbereichs der Pinole (4),
wobei die erste und die zweite Position der Pinole (4) um die Exzentrizität der benachbarten Verteilerhülse (3) gegeneinander versetzt sind.

11. Verfahren nach Anspruch 10, dadurch gekennzeichnet, daß die Schritte b) und c) nach einmaligem Einspannen der Pinole (4) in der zweiten Position durchgeführt werden.

12. Verfahren nach einem der Ansprüche 10 oder 11, dadurch gekennzeichnet, daß das Ablängen der Pinole (4) an ihren beiden Enden in der ersten und/oder der zweiten Position der Pinole (4) erfolgt.

13. Verfahren zur Herstellung eines Pinolenwerkzeuges nach mindestens einem der Ansprüche 9 bis 12 mit einem Gehäuse (2), einer Pinole (4, Innenpinole) und mindestens einer Verteilerhülse (3, Außenpinole), wobei die Verteilerhülse (3) eine Schmelzezufuhr (7), einen Verteilerkanal (5) und ein Drosselfeld (8) aufweist,
**dadurch gekennzeichnet,**
daß die Herstellung jeder Verteilerhülse (3) folgende Schritte in beliebiger Reihenfolge umfaßt:
a) Einspannen der Verteilerhülse (3) in einer dritten Position und Drehen einer Innenbohrung,
b) Einspannen der Verteilerhülse (3) in einer vierten Position und Drehen des Außenumfangs im Bereich der Schmelzezufuhr (7) und gegebenenfalls zusätzlich im Bereich des Verteilerkanals (5) und/oder des Drosselfeldes (8),
c) Einspannen der Verteilerhülse (3) in einer dritten Position und Drehen des Außenumfangs des dem Kreisringaustrittsspalt (13) zugewandten Endbereichs der Verteilerhülse (3),
wobei die dritte und die vierte Position der Verteilerhülse (3) um die Exzentrizität der benachbarten Verteilerhülse bzw. Pinole (4) gegeneinander versetzt sind.

14. Verfahren nach Anspruch 13, dadurch gekennzeichnet, daß die Schritte a) und c) nach einmaligem Einspannen der Verteilerhülse (3) in der dritten Position durchgeführt werden.

15. Verfahren nach einem der Ansprüche 13 oder 14, dadurch gekennzeichnet, daß das Ablängen der Verteilerhülse an ihren beiden Enden in der dritten und/oder der vierten Position erfolgt.

16. Verfahren nach mindestens einem der Ansprüche 13 bis 15, dadurch gekennzeichnet, daß zuerst der Außenumfang der Pinole (4) und die Innenbohrung der Verteilerhülse (3) gedreht werden und anschließend die Verteilerhülse (3) auf die Pinole (4) aufgesteckt und mit ihr verstiftet, in der zweiten Position eingespannt und anschließend der Außenumfang der Verteilerhülse (3) gedreht wird.
